# EUROPÄISCHE PATENTSCHRIFT

(11) **EP 3 899 298 B1**
(45) Veröffentlichungstag und Bekanntmachung des Hinweises auf die Patenterteilung: **24.01.2024**
(21) Anmeldenummer: 19832891.6
(22) Anmeldetag: 18.12.2019
(51) Int. Cl.: F16D 3/62, F16D 3/72

(54) **KUPPLUNGSVORRICHTUNG**
COUPLING DEVICE
DISPOSITIF D'ACCOUPLEMENT

(30) Priorität: 19.12.2018 DE 102018010053
(43) Veröffentlichungstag der Anmeldung: 27.10.2021
(73) Patentinhaber: Süddeutsche Gelenkscheibenfabrik GmbH & Co. KG, 84478 Waldkraiburg (DE); Siemens Mobility GmbH, 81739 München (DE)
(72) Erfinder: HUBER, Armin, 84573 Schoenberg (DE); EBENHOFER, Martin, 84367 Reut (DE); ORTHOFER, Wolfgang jr., 84453 Muehldorf a. Inn (DE); SEITZ, Peter, 91224 Pommelsbrunn (DE); OUDE KOTTE, Freerk Jacobus, 90547 Stein (DE)
(74) Vertreter: Thum, Bernhard
(86) Internationale Anmeldenummer: PCT/EP2019/085908
(87) Internationale Veröffentlichungsnummer: WO 2020/127458

(56) Entgegenhaltungen:
- WO-A1-2016/097195
- DE-A1-102015 009 195
- DE-A1-102015 010 195

## Beschreibung

Die vorliegende Erfindung betrifft eine Kupplungsvorrichtung, insbesondere für einen Fahrzeugantrieb. Die vorliegende Erfindung betrifft insbesondere eine Kupplungsvorrichtung für einen Schienenfahrzeugantrieb. Ferner sind ein Drehgestell für ein Schienenfahrzeug und ein Schienenfahrzeug Gegenstand der vorliegenden Erfindung.

DE 10 2015 010 195 A1 offenbart eine Kupplungsvorrichtung. Die Kupplungsvorrichtung weist einen ersten Flansch und einen zweiten Flansch auf. Zwischen dem ersten Flansch und dem zweiten Flansch sind eine erste fadenverstärkte Gelenkvorrichtung, eine Verbindungsanordnung und eine zweite fadenverstärkte Gelenkvorrichtung angeordnet. Die Kupplungseinrichtung weist Zentriereinrichtungen auf. Jede Zentriereinrichtung hat ein erstes Zentrierteil und ein zweites Zentrierteil. Das zweite Zentrierteil ist an einem rohrförmigen Abschnitt des Flansches angeordnet. Der axiale Abschnitt des ersten Zentrierteils stützt sich an dem ersten Zentrierteil radial ab und verläuft parallel zur Innenumfangsfläche des elastischen Gelenkkörpers.

WO 2016/195 A1 offenbart eine Kupplungsvorrichtung mit einem ersten Flansch und einem zweiten Flansch. Zwischen dem ersten Flansch und dem zweiten Flansch ist eine erste fadenverstärkten Gelenkvorrichtung, eine Verbindungsanordnung und eine zweite fadenverstärkten Gelenkvorrichtung angeordnet.

Es ist eine Aufgabe der vorliegenden Erfindung, eine Kupplungsvorrichtung der eingangs bezeichneten Art bereitzustellen, die den in radialer Richtung zur Verfügung stehen Bauraum optimal nutzt, in axialer Richtung wenig Bauraum benötigt und große Beugewinkel aufnehmen kann.

Diese Aufgabe wird mit einer Kupplungsvorrichtung mit den Merkmalen des Patentanspruchs 1 gelöst.

Weitere Ausführungsformen der Erfindung sind in den abhängigen Ansprüchen angegeben.

Die Kupplungsvorrichtung für einen Fahrzeugantrieb umfasst
wenigstens eine erste Kupplung, die wenigstens eine erste fadenverstärkte Gelenkvorrichtung aufweist, wobei die erste fadenverstärkte Gelenkvorrichtung wenigstens ein Fadenpaket aufweist, das in wenigstens einen elastischen Körper eingebettet ist,
wobei die wenigstens eine erste Kupplung wenigstens eine Abstützeinrichtung aufweist, die mit der ersten fadenverstärkten Gelenkvorrichtung verbunden ist, wobei die wenigstens eine Abstützeinrichtung die erste fadenverstärkte Gelenkvorrichtung in radialer Richtung abstützt.

Durch die Abstützeinrichtung erhöht sich die Anzahl der Kupplungsebenen der ersten und/oder der zweiten Kupplung. Durch die Abstützeinrichtung bilden die erste und/oder die zweite Kupplung zwei in Serie geschaltete Teilkupplungen, wodurch die Kupplungsvorrichtung große Beugewinkel aufnehmen kann. Die beiden Teilkupplungen sind innerhalb der ersten oder der zweiten Kupplung bzw. innerhalb der Kupplungsvorrichtung an der gleichen axialen Position angeordnet. Aus diesem Grund nimmt die Kupplungsvorrichtung in axialer Richtung wenig Bauraum ein. Anders ausgedrückt, sind die Teilkupplungen der ersten und/oder der zweiten Kupplung tangential und damit bauraumsparend angeordnet. Durch diese Anordnung der Teilkupplungen kann das wenigstens eine Zwischenstück mit einer vorbestimmten axialen Erstreckung ausgeführt werden.

Die erste fadenverstärkte Gelenkvorrichtung oder zweite fadenverstärkte Gelenkvorrichtung können von der Abstützeinrichtung in einer vorbestimmten radialen Position gehalten werden, so dass der zur Verfügung stehende radiale Bauraum optimal ausgenutzt werden kann. Insbesondere kann die jeweilige fadenverstärkte Gelenkvorrichtung mit der wenigstens einen Abstützeinrichtung in einer vorbestimmten radialen Position gehalten werden, in der die fadenverstärkte Gelenkvorrichtung in axialer Richtung betrachtet die Form eines Vielecks einnehmen kann. Auf diese Weise kann eine verbesserte Nutzung eines zur Verfügung stehenden radialen oder hohlzylinderförmigen Bauraums erreicht werden.

Die Kupplungsvorrichtung kann ferner wenigstens eine zweite Kupplung umfassen, die wenigstens eine zweite fadenverstärkte Gelenkvorrichtung aufweist, wobei die zweite fadenverstärkte Gelenkvorrichtung wenigstens ein Fadenpaket aufweist, das in wenigstens einen elastischen Körper eingebettet ist. Wenigstens ein Zwischenstück kann vorgesehen sein, das die erste Kupplung und die zweite Kupplung miteinander verbindet. Die wenigstens eine zweite Kupplung kann wenigstens eine Abstützeinrichtung aufweisen, die mit der zweiten fadenverstärkten Gelenkvorrichtung verbunden ist, wobei die wenigstens eine Abstützeinrichtung die die zweite fadenverstärkte Gelenkvorrichtung in radialer Richtung abstützen kann.

Die wenigstens eine Abstützeinrichtung kann fliegend gelagert sein. Die wenigstens eine Abstützeinrichtung kann nur mit der ihr zugeordneten fadenverstärkten Gelenkvorrichtung in Kontakt stehen bzw. nur mit dieser fadenverstärkten Gelenkvorrichtung verbunden sein. Die Abstützeinrichtung ist derart ausgebildet, dass sie sich nicht an weiteren Komponenten der Kupplungsvorrichtung abstützen muss.

Die wenigstens eine Abstützeinrichtung kann mehrere Abstützelemente aufweisen. Die Abstützelemente können sich in radialer Richtung erstrecken. Die Abstützelemente können mit der fadenverstärkten Gelenkvorrichtung verbunden sein. Die Abstützelemente können sich in radialer Richtung einwärts oder auswärts erstrecken. Die Abstützeinrichtung kann mehrere in axialer Richtung zueinander versetzte Abstützelemente aufweisen, die zwischen sich die der Abstützeinrichtung zugeordnete Gelenkvorrichtung aufnehmen können. Anders ausgedrückt, können sich an den beiden axialen Seiten der fadenverstärkten Gelenkvorrichtungen Abstützelemente der Abstützeinrichtung erstrecken, die mit der jeweiligen fadenverstärkten Gelenkvorrichtung verbunden sind. Die Abstützelemente können mit der fadenverstärkten Gelenkvorrichtung über Verbindungselemente verbunden werden. Diese Verbindungselemente können insbesondere Schrauben sein. Zumindest einige der Abstützelemente können eine Öffnung mit einem Innengewinde aufweisen, in das die Verbindungselemente eingeschraubt werden können. Die Verbindungselemente können somit durch ein Abstützelement und die fadenverstärkte Gelenkvorrichtung hindurch geführt und mit einem weiteren radialen Abstützelement verschraubt werden.

Die wenigstens eine Abstützeinrichtung kann mehrteilig ausgebildet sein. Die Abstützeinrichtung kann beispielsweise zweiteilig aufgebaut sein. Die beiden Teile der Abstützeinrichtung können an der der Abstützeinrichtung zugeordneten fadenverstärkten Gelenkvorrichtung angelegt und zusammengefügt werden. Die Verbindung zwischen den Teilen der Abstützeinrichtung kann über die Verbindungselemente erfolgen, mit denen auch die fadenverstärkte Gelenkvorrichtung an der Abstützeinrichtung angebracht wird.

Die wenigstens eine Abstützeinrichtung kann derart ausgebildet sein, dass sämtliche Abstützelemente miteinander verbunden sind. Die wenigstens eine Abstützeinrichtung kann wenigstens einen ringförmigen Abschnitt aufweisen, der die einzelnen Abstützelemente miteinander verbindet. Der wenigstens eine ringförmige Abschnitt kann sich radial außen um die Abstützelemente herum erstrecken und diese miteinander verbinden. Ferner kann sich der wenigstens eine ringförmige Abschnitt radial innen entlang der Abstützelemente erstrecken und diese miteinander verbinden. Der wenigstens eine ringförmige Abschnitt kann sich radial auswärts oder radial einwärts der fadenverstärkten Gelenkvorrichtungen erstrecken. Der ringförmige Abschnitt kann eine vorbestimmte axiale Erstreckung aufweisen, die zumindest größer oder gleich zu der axialen Erstreckung der fadenverstärkten Gelenkvorrichtungen ist. Die wenigstens eine Abstützeinrichtung kann wenigstens ein ringförmiges Element aufweisen, ausgehend von dem sich die Abstützelemente in radialer Richtung einwärts oder auswärts erstrecken.

Das wenigstens eine Zwischenstück kann fliegend gelagert sein. Das wenigstens eine Zwischenstück kann ausschließlich mit den fadenverstärkten Gelenkvorrichtungen verbunden sein. Das wenigstens eine Zwischenstück kann sich nicht an weiteren Komponenten der Kupplungsvorrichtung abstützen.

Die erste Kupplung kann mit einem ersten Flansch verbunden sein, der einen nabenförmigen Abschnitt hat. Der nabenförmige Abschnitt kann rohrförmig ausgebildet sein. Der nabenförmige Abschnitt kann sich in Richtung des Zwischenstücks erstrecken. Der nabenförmige Abschnitt kann sich durch eine der fadenverstärkten Gelenkvorrichtungen und/oder durch die Abstützeinrichtung erstrecken. Der erste Flansch kann mehrere erste Flanscharme aufweisen. Die ersten Flanscharme können sich ausgehend von dem nabenförmigen Abschnitt radial auswärts erstrecken. Der erste Flansch kann drei erste Flanscharme aufweisen. Der erste Flansch kann auch mehr als drei Flanscharme aufweisen.

Die zweite Kupplung kann mit einem zweiten Flansch verbunden sein. Der zweite Flansch kann einen Verbindungsabschnitt haben, der zur Aufnahme von mehreren Verbindungselementen ausgebildet ist. Der zweite Flansch kann mehrere zweite Flanscharme aufweisen. Der zweite Flansch kann drei Flanscharme aufweisen. Der zweite Flansch kann auch mehr als drei Flanscharme aufweisen. Der zweite Flansch kann Teil einer Flanscheinrichtung sein, die neben dem zweiten Flansch wenigstens eine Abdeckung aufweisen kann. Die wenigstens eine Abdeckung kann sich radial außen um die Abstützeinrichtung und die fadenverstärkte Gelenkvorrichtung herum erstrecken. Die fadenverstärkte Gelenkvorrichtungen und die Abstützeinrichtung können somit radial innerhalb der Abdeckung angeordnet sein.

Das Zwischenstück kann rohrförmig ausgebildet sein. Das Zwischenstück kann mehrere Arme aufweisen. Die Arme des Zwischenstücks können sich in radialer Richtung erstrecken. Insbesondere können sich die Arme des Zwischenstücks in radialer Richtung auswärts erstrecken. An jedem axialen Ende des Zwischenstücks können radiale Arme vorgesehen sein. An jedem axialen Ende des Zwischenstücks können drei Arme ausgebildet sein. Die erste fadenverstärkte Gelenkvorrichtung kann mit den ersten Flanscharmen des ersten Flanschs und den Armen an einem axialen Ende des Zwischenstücks verbunden sein. Die zweite fadenverstärkte Gelenkvorrichtung kann mit den zweiten Flanscharmen des zweiten Flanschs und den Armen an dem jeweils anderen axialen Ende des Zwischenstücks verbunden sein. Die radialen Abstützelemente der Abstützeinrichtung der ersten Kupplung können in Umfangsrichtung zwischen den ersten Flanscharmen und den Armen des Zwischenstücks angeordnet sein. Die radialen Abstützelemente der Abstützeinrichtung der zweiten Kupplung können in Umfangsrichtung zwischen den zweiten Flanscharmen und den Armen des Zwischenstücks angeordnet sein.

Die fadenverstärkten Gelenkvorrichtungen können wenigstens ein Umlenkelement aufweisen, das mit der Abstützeinrichtung verbunden werden kann. Das wenigstens eine Umlenkelement kann buchsenförmig ausgebildet sein. Durch das wenigstens eine Umlenkelement kann sich ein Verbindungselement erstrecken, das die fadenverstärkten Gelenkvorrichtungen mit den Abstützelementen der Abstützeinrichtung verbindet. Über das wenigstens eine Umlenkelement kann die Abstützeinrichtung an der fadenverstärkten Gelenkvorrichtung angreifen.

Die erste fadenverstärkte Gelenkvorrichtung und/oder die zweite fadenverstärkte Gelenkvorrichtung können sich aus mehreren fadenverstärkten Kupplungselementen zusammensetzen, die jeweils wenigstens einen elastischen Körper aufweisen. Die fadenverstärkten Kupplungselemente können wenigstens zwei Buchsen und wenigstens ein Fadenpaket aufweisen, das die beiden Buchsen umschlingt. Zumindest das wenigstens eine Fadenpaket kann in den wenigstens einen elastischen Körper eingebettet sein. Das wenigstens eine Fadenpaket kann über ein oder mehrere Bundelemente an den Buchsen gehalten werden. Das Bundelement oder die Bundelemente können in axialer Richtung der Buchsen auf die Buchsen aufgeschoben werden und das wenigstens eine Fadenpaket in seiner vorbestimmten axialen Position halten. Die Bundelemente können einstückig mit den Buchsen ausgebildet sein. Die Bundelemente können sich in radialer Richtung von den rohrförmigen Buchsen weg erstrecken. Auch die Buchsen und die Bundelemente können zumindest teilweise bzw. abschnittsweise in den wenigstens einen elastischen Körper eingebettet werden. Die Buchsen können mit einem der Flansche und dem Zwischenstück verbunden werden, sodass über die fadenverstärkte Gelenkvorrichtung eine drehmomentübertragende Verbindung zwischen den beiden Flanschen hergestellt werden kann. Beispielsweise können drei Buchsen einem der Flansche und drei Buchsen dem Zwischenstück zugeordnet sein. Diese Buchsen können dann mit dem jeweiligen Flansch und dem Zwischenstück verbunden werden. Die Fadenpakete und die Buchsen können zumindest abschnittsweise in einen wenigstens einen elastischen Körper eingebettet werden.

Die wenigstens eine Abstützeinrichtung kann derart ausgebildet sein, dass sie die Fadenpakete der fadenverstärkten Gelenkvorrichtungen umlenken kann. Vorzugsweise kann die wenigstens eine Abstützeinrichtung die Fadenpakete im Bereich zwischen zwei korrespondierende Buchsen umlenken. Die Anzahl der Buchsen kann der Anzahl der Abstützelemente entsprechen.

Ein fadenverstärktes Kupplungselement kann einen ersten Flanscharm des ersten Flanschs, einen Arm des Zwischenstücks und ein Abstützelement verbinden. Ein fadenverstärktes Kupplungselement kann einen Flanscharm des zweiten Flanschs, einen Arm des Zwischenstücks und ein Abstützelement verbinden.

Die Abstützeinrichtung kann mit den ersten Flanscharmen und/oder den zweiten Flanscharmen zumindest eine gemeinsame Ebene aufweisen, die sich senkrecht zur Mittelachse der Kupplung erstreckt. Gleiches gilt für die Arme des Zwischenstücks. Zumindest die sich in radialer Richtung erstreckenden Abschnitte der Flanscharme des ersten Flanschs und des zweiten Flanschs und die Abstützelemente der Abstützeinrichtung können eine gemeinsame Ebene aufweisen. Die axiale Erstreckung der Abstützeinrichtung kann zumindest mit der axialen Erstreckung der radialen Abschnitte der ersten Flanscharme und/oder der zweiten Flanscharme zumindest abschnittsweise überlappen. Zusätzlich oder alternativ kann die axiale Erstreckung der Abstützeinrichtung ferner auch mit der axialen Erstreckung der elastischen Elemente überlappen. Vorzugsweise stellt sich diese Überlappung in radialer Richtung ein. Die axiale Erstreckung der Abstützeinrichtung kann der axialen Erstreckung der radialen Abschnitte der Flanscharme des ersten Flanschs und/oder des zweiten Flansches entsprechen. Die voranstehenden Ausführungen können analog auch für die Annahme des Zwischenstücks gelten.

Ein fadenverstärktes Kupplungselement kann wenigstens ein Fadenpaket, wenigstens zwei Buchsen, wobei das wenigstens eine Fadenpaket wenigstens zwei der Buchsen umschlingt, und wenigstens ein Umlenkelement umfassen, wobei sich das wenigstens eine Fadenpaket zwischen den wenigstens zwei Buchsen an das wenigstens eine Umlenkelement anlegt.

Das wenigstens eine Umlenkelement kann in Umfangsrichtung zwischen den beiden Buchsen angeordnet sein. Das Fadenpaket umschlingt das wenigstens eine Umlenkelement nicht bzw. nur teilweise. Das Fadenpaket kann im Bereich zwischen den Buchsen zwei Stränge bilden. Durch das Umlenkelement werden die Stränge des Fadenpakets aneinander angenähert, sodass zumindest einer der Stränge geknickt oder gekrümmt verläuft. Es können auch beide Stränge einen Knick oder eine Krümmung aufweisen, wobei der Strang, der an dem Umlenkelement anliegt, stärker geknickt oder gekrümmt ist. Das wenigstens eine Umlenkelement kann das Fadenpaket in zwei Schenkel unterteilen, die jeweils eine Buchse aufweisen und abgewinkelt zueinander verlaufen. Das wenigstens eine Fadenpaket, die wenigstens zwei Buchsen und das wenigstens eine Umlenkelement können zumindest abschnittsweise in einen elastischen Körper eingebettet sein. Das wenigstens eine Umlenkelement kann im Bereich zwischen den Buchsen angeordnet sein.

Das fadenverstärkte Kupplungselement kann mehrere Fadenpakete aufweisen. Jedes Fadenpaket kann genau zwei Buchsen umschlingen. Das fadenverstärkte Kupplungselement kann mehrere Umlenkelemente aufweisen, die untereinander über wenigstens ein Verbindungselement miteinander verbunden sind. Dem wenigstens einen Fadenpaket kann wenigstens ein Umlenkelement zugeordnet sein. Eine von einem Fadenpaket umschlungene Buchse wird nur von diesem Fadenpaket umschlungen aber nicht von einem anderen Fadenpaket. Jedes Fadenpaket kann mit den beiden Buchsen eine Einheit bilden. Ein fadenverstärktes Kupplungselement kann mehrere solcher Einheiten aufweisen. Diese Einheiten können zumindest teilweise in einen elastischen Körper eingebettet sein. Ein fadenverstärktes Kupplungselement kann beispielsweise zwei, drei, oder mehr Fadenpakete aufweisen.

Die Umlenkelemente können in einem Bereich zwischen den Buchsen angeordnet sein. Die Umlenkelemente können über Verbindungselemente miteinander verbunden sein, die an den axialen Enden der Umlenkelemente angeordnet sind. Die Umlenkelemente können buchsenförmig ausgebildet sein. An den Buchsen können Bundelemente angeordnet sein, die die Fadenpakete an den Buchsen halten können. Zumindest einige der Buchsen, der Bundelemente, der Umlenkelemente und der plattenförmigen Verbindungselemente können zumindest teilweise in einen elastischen Körper eingebettet sein. Ein Kupplungselement kann beispielsweise drei Fadenpakete aufweisen. Jedes der Fadenpakete kann zwei Buchsen umschlingen. Jedes der Fadenpakete kann mit zwei Buchsen, die von dem Fadenpaket umschlungen werden, eine Einheit bilden. Zwischen den Buchsen können die Umlenkelemente vorgesehen sein, die die Fadenpakete umlenken und abstützen können. Die Umlenkelemente können über plattenförmige Verbindungselemente miteinander verbunden sein. Ein Umlenkelement kann die beiden von dem Fadenpaket zwischen den Buchsen gebildeten Stränge aneinander annähern, sodass einer der Stränge einen stärker geknickten Verlauf als der jeweils andere Strang einnehmen kann. Jedes der Fadenpakete kann somit gekrümmt oder geknickt zwischen den Buchsen verlaufen.

In Abhängigkeit ihrer Belastung (Zug oder Druck) können die fadenverstärkten Kupplungselemente ohne die Abstützeinrichtung nach radial innen gezogen oder nach radial außen gedrückt werden. Die Abstützeinrichtung kann die Kupplungselemente in radialer Richtung abstützen. Die Abstützeinrichtung kann die fadenverstärkten Kupplungselemente in ihrer vorbestimmten radialen Position halten. Dies kann insbesondere für den Bereich der Umlenkelemente gelten, die mit den Abstützelementen verbunden sein können. Die Abstützelemente können insbesondere verhindern, dass sich der zentrale Bereich mit den Umlenkelementen der fadenverstärkten Kupplungselemente zwischen den Buchsen in Richtung der Mittelachse verlagert. Die Abstützelemente können dementsprechend dafür sorgen, dass die Kupplung bzw. die Einheit aus der Abstützeinrichtung und den fadenverstärkten Kopplungselementen auch im Betrieb der Kupplung ihren vieleckförmigen Aufbau beibehalten kann. Dadurch können große Beugewinkel ausgeglichen und der radiale Bauraum optimal ausgenutzt werden, da ein Vieleck mit möglichst vielen Ecken einen kreisförmigen oder hohlzylinderförmigen Bauraum optimal ausfüllen kann.

Die vorliegende Erfindung betrifft ferner ein Drehgestell für ein Schienenfahrzeug. Das Drehgestell umfasst wenigstens einen Radsatz, der eine Radsatzwelle aufweist, wenigstens einen Motor, und wenigstens einen Kupplungsvorrichtung, wobei die Kupplungsvorrichtung den Motor mit der Radsatzwelle koppelt.

Der Motor und/oder die wenigstens eine Kupplungsvorrichtung können koaxial mit der Radsatzwelle angeordnet sein. Die Radsatzwelle kann sich durch die Kupplungsvorrichtung und/oder den Motor erstrecken. Der erste Flansch der Kupplungsvorrichtung kann drehfest mit der Radsatzwelle verbunden sein. Der erste Flansch kann mit dem nabenförmigen Abschnitt auf die Radsatzwelle aufgepresst sein. Der zweite Flansch kann über seinen Verbindungsabschnitt mit einer Motorausgangswelle verbunden sein. Zwischen dem zweiten Flansch und der Radsatzwelle kann sich ein vorbestimmter radialer Abstand einstellen. Zwischen dem Zwischenstück und der Radsatzwelle kann sich ein vorbestimmter radialer Abstand einstellen. Der Verbindungsabschnitt kann mit der Motorausgangswelle insbesondere über Verbindungselemente verbunden werden. Der Verbindungsabschnitt kann mit der Motorausgangswelle verschraubt werden.

Ferner betrifft die vorliegende Erfindung ein Schienenfahrzeug mit wenigstens einer solchen Kupplungsvorrichtung oder wenigstens einem solchen Drehgestell.

Im Folgenden werden beispielhafte Ausführungsformen mit Bezug auf die beigefügten Figuren beschrieben. Es stellen dar:
- Figur 1: eine perspektivische Ansicht einer Kupplungsvorrichtung gemäß einer Ausführungsform der Erfindung;
- Figur 2: eine Draufsicht der Kupplungsvorrichtung gemäß Figur 1;
- Figur 3: eine Seitenansicht der Kupplungsvorrichtung gemäß der Figuren 1 und 2;
- Figur 4: eine perspektivische Ansicht der Kupplungsvorrichtung ohne Abstützeinrichtungen;
- Figur 5: eine weitere Draufsicht der Kupplungsvorrichtung;
- Figur 6: eine Schnittansicht entlang der Schnittlinie VI-VI in Figur 5;
- Figuren 7 bis 12: verschiedene Ansichten eines fadenverstärkten Kupplungselements gemäß einem ersten Ausführungsbeispiel;
- Figuren 13 bis 18: verschiedene Ansichten eines fadenverstärkten Kupplungselements gemäß einem zweiten Ausführungsbeispiel;
- Figuren 19 und 20: Ansichten der Abstützeinrichtungen der Kupplungsvorrichtung gemäß der Figuren 1 bis 6 mit daran angebrachten Kupplungselementen;
- Figur 21: eine Draufsicht eines Drehgestells eines Schienenfahrzeugs mit der Kupplungsvorrichtung gemäß der Figuren 1 bis 6.

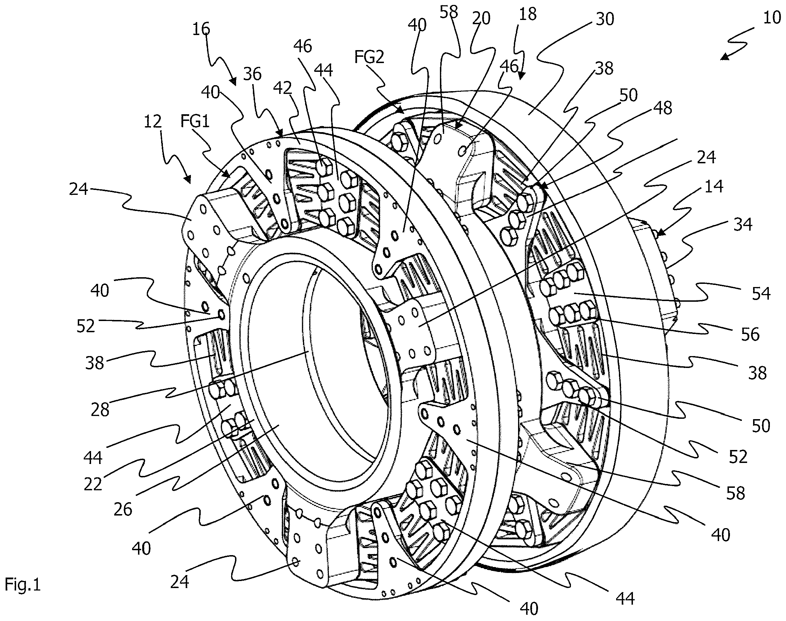

Figur 1 zeigt eine perspektivische Ansicht einer Kupplungsvorrichtung 10. Die Kupplungsvorrichtung 10 umfasst einen Flansch 12 und eine Flanscheinrichtung 14. Zwischen dem Flansch 12 und der Flanscheinrichtung 14 sind eine erste Kupplung 16, eine zweite Kupplung 18 und ein Zwischenstück 20 angeordnet, das die erste Kupplung 16 mit der zweiten Kupplung 18 verbindet.

Der (erste) Flansch 12 weist einen nabenförmigen Abschnitt 22 und drei (erste) Flanscharme 24 auf, die sich von dem nabenförmigen Abschnitt 22 ausgehend radial auswärts erstrecken. Der nabenförmige Abschnitt 22 erstreckt sich rohrförmig in Richtung des Zwischenstücks 12. Der nabenförmige Abschnitt 22 weist eine Öffnung 26 auf, an deren Innenumfangsfläche eine Nut 28 ausgebildet ist. Der erste Flansch 12 kann mit seinem nabenförmigen Abschnitt 22 auf eine Radsatzwelle (nicht gezeigt) eines Radsatzes eines Schienenfahrzeugs aufgepresst werden.

Die Flanscheinrichtung 14 hat eine Abdeckung 30 und einen Verschraubungsabschnitt 34, mit dem die Flanscheinrichtung 14 mit einem nicht gezeigten Motor verbunden werden kann.

Die erste Kupplung 16 weist eine Abstützeinrichtung 36 und mehrere fadenverstärkte Kupplungselemente 38 auf. Die fadenverstärkten Kupplungselemente 38 bilden eine fadenverstärkte Gelenkvorrichtung FG1. Die Abstützeinrichtung 36 weist mehrere radiale Abstützelemente 40 und einen ringförmigen Abschnitt 42 auf. Die Abstützelemente 40 erstrecken sich ausgehend von dem ringförmigen Abschnitt 42 radial einwärts. Die Abstützelemente 40 sind mit den fadenverstärkten Kupplungselementen 38 verbunden.

Die fadenverstärkten Kupplungselemente 38 sind neben ihrer Verbindung mit den Abstützelementen 40 auch mit den Flanscharmen 24 des Flanschs 12 und dem Zwischenstück 20 verbunden. Die Verbindung der fadenverstärkten Kupplungselemente 38 mit dem Zwischenstück 20 wird durch die Verbindungsplatten 44 und den diesen Verbindungsplatten 44 zugeordneten Verbindungselementen 46 angezeigt. Die Verbindungselemente 46 können Schrauben oder Bolzen sein.

Die zweite Kupplung 18 umfasst die fadenverstärkten Kupplungselemente 38 und eine Abstützeinrichtung 48 mit sich radial auswärts erstreckenden Abstützelementen 50. Die fadenverstärkten Kupplungselemente 38 bilden eine fadenverstärkte Gelenkvorrichtung FG2.

Die Abstützelemente 40 und 50 der Abstützeinrichtungen 36 und 48 sind über Verbindungselemente 52 mit den fadenverstärkten Kupplungselementen 38 verbunden. Die Verbindungselemente 52 erstrecken sich durch die Kupplungselemente 38. Die Abstützeinrichtungen 36 und 48 weisen jeweils in axialer Richtung zueinander versetzte Abstützelemente auf, zwischen denen die Kupplungselemente 38 angeordnet sind, wobei in Figur 1 nur die Abstützelemente 40 und 50 gezeigt sind. Die Verbindungselemente 52 erstrecken sich zwischen diesen beiden axial zueinander versetzten Abstützelementen 40, 50 und dabei durch die Kupplungselemente 38. Einige der axial zueinander versetzten Abstützelemente können ein Innengewinde aufweisen. Sind als Verbindungselemente 52 Schrauben vorgesehen, können diese in das Innengewinde der Abstützelemente eingeschraubt werden, um die Abstützeinrichtung 36, 48 mit den Kupplungselementen 38 zu verbinden. Die Kupplungselemente 38 der zweiten Kupplung 18 sind mit der Flanscheinrichtung 14 verbunden, wie durch die Verbindungsplatten 54 und Verbindungselemente 56 angezeigt wird. Die Verbindungselemente 56 erstrecken sich durch die Kupplungselemente 38 in Richtung der Flanscheinrichtung 14.

Das Zwischenstück 20 weist Arme 58 auf, die sich radial auswärts erstrecken. Das Zwischenstück 20 ist über die Arme 58 mit den Kupplungselementen 38 der zweiten Kupplung 18 verbunden.

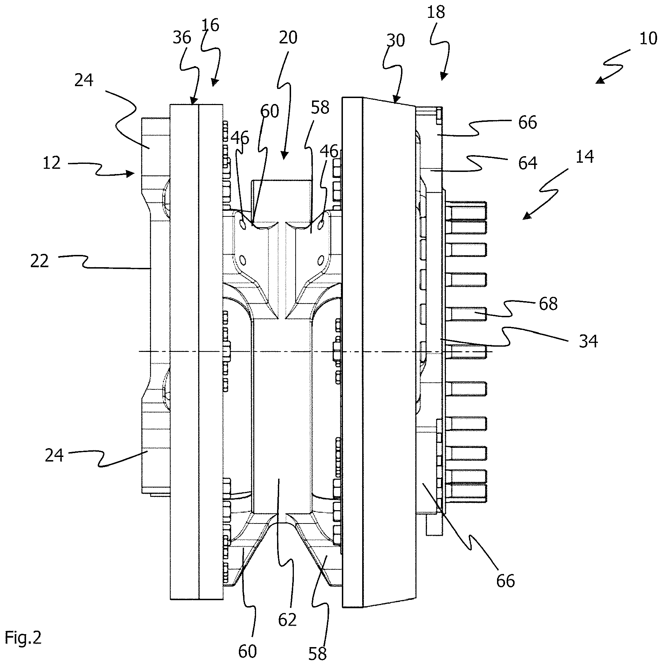

Figur 2 zeigt eine Draufsicht der Kupplungsvorrichtung 10. Die Kupplungsvorrichtung 10 umfasst den Flansch 12, die Flanscheinrichtung 14 und die in axialer Richtung zwischen dem Flansch 12 und der Flanscheinrichtung 14 angeordneten Kupplungen 16 und 18, die über das Zwischenstück 20 miteinander verbunden sind.

Das Zwischenstück 20 weist die sich in radialer Richtung erstreckenden Arme 58 und 60 auf. Die Arme 58 dienen zur Verbindung des Zwischenstücks 20 mit den in Figur 2 nicht gezeigten Kupplungselementen der zweiten Kupplung 18. Die Arme 60 verbinden das Zwischenstück 20 mit den in Figur 2 nicht gezeigten fadenverstärkten Kupplungselementen der ersten Kupplung 16. Die Arme 58 und 60 des Zwischenstücks 20 erstrecken sich ausgehend von einem ringförmigen bzw. rohrförmigen Abschnitt 62 radial auswärts.

Die Flanscheinrichtung 14 weist die Abdeckung 30 auf, innerhalb der sich die Abstützeinrichtung 48 und die fadenverstärkten Kupplungselemente 38 (siehe Figur 1) erstrecken.. Neben der Abdeckung 30 umfasst die Flanscheinrichtung 14 einen (zweiten) Flansch 64, an dem der Verbindungsabschnitt 34 ausgebildet ist. Der Flansch 64 hat (zweite) Flanscharme 66. Über die Flanscharme 66 ist der Flansch 64 mit der Abdeckung 30 verbunden, insbesondere verschraubt. Der Verbindungsabschnitt 34 umfasst mehrere Verbindungselemente 68. Die Verbindungselemente 68 können Schrauben sein. Die Verbindungselemente 68 erstrecken sich in axialer Richtung. Die Verbindungselemente 68 dienen zur Verbindung der Flanscheinrichtung 14 mit einer Motorausgangswelle eines Motors (nicht gezeigt).

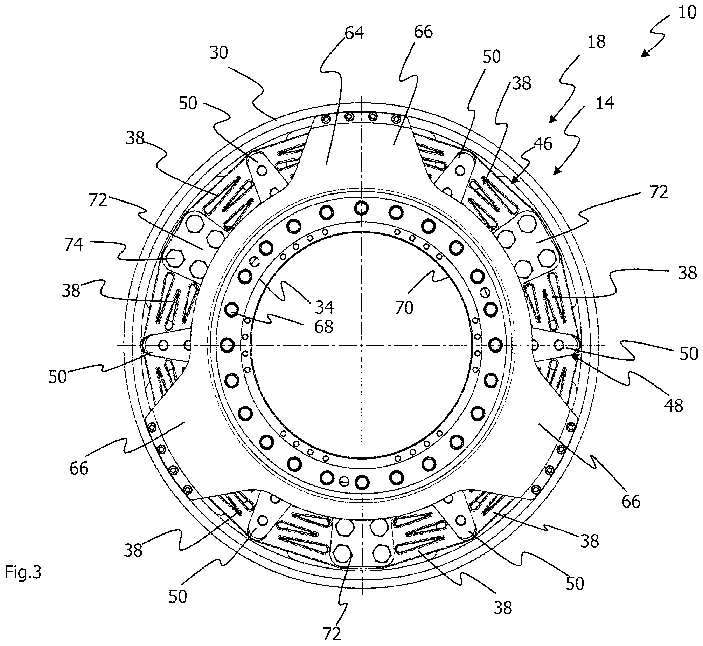

Figur 3 zeigt eine Seitenansicht der Kupplungsvorrichtung 10 mit Blickrichtung auf die Flanscheinrichtung 14 und die Kupplung 18. Die Flanscheinrichtung 14 weist den Flansch 64 und die Abdeckung 30 auf. Die Abdeckung 30 ist mit den Flanscharmen 66 des Flanschs 64 verbunden. Die Flanscharme 66 erstrecken sich in radialer Richtung auswärts von dem Verbindungsabschnitt 34, an dem die Verbindungselemente 68 erkennbar sind. Die Flanscheinrichtung 14 bzw. der Flansch 64 weist eine Öffnung 70 auf, durch die sich eine Radsatzwelle (nicht gezeigt) erstrecken kann. Die Öffnung 70 ist derart dimensioniert, dass die Radsatzwelle (nicht gezeigt) den Flansch 64 bzw. den Verbindungsabschnitt 34 nicht kontaktieren kann. Über die Flanscharme 66 ist der Flansch 64 mit den fadenverstärkten Kupplungselementen 38 der fadenverstärkten Gelenkvorrichtungen FG2 bzw. der zweiten Kupplung 18 verbunden. Die fadenverstärkten Kupplungselemente 38 sind in ihrem in Umfangsrichtung zentralen Bereich mit den Abstützelementen 50 der Abstützeinrichtung 48 verbunden.

Die Abstützelemente 50 erstrecken sich in radialer Richtung auswärts. Die Abstützeinrichtung 48 und die Kupplungselemente 38 werden in radialer Richtung von der Abdeckung 38 umgeben. Die Kupplungselemente 38 sind mit dem Zwischenstück 20 (siehe Figur 2) verbunden. Dies wird durch die Verbindungsplatten 72 und die den Verbindungsplatten 72 zugeordneten Verbindungselemente 74 angezeigt. Die Abdeckung 30 ist mit den radial äußeren Endabschnitten der Kupplungsarme 66 verbunden. Insbesondere können die Flanscharme 66 mit der Abdeckung 30 verschraubt sein.

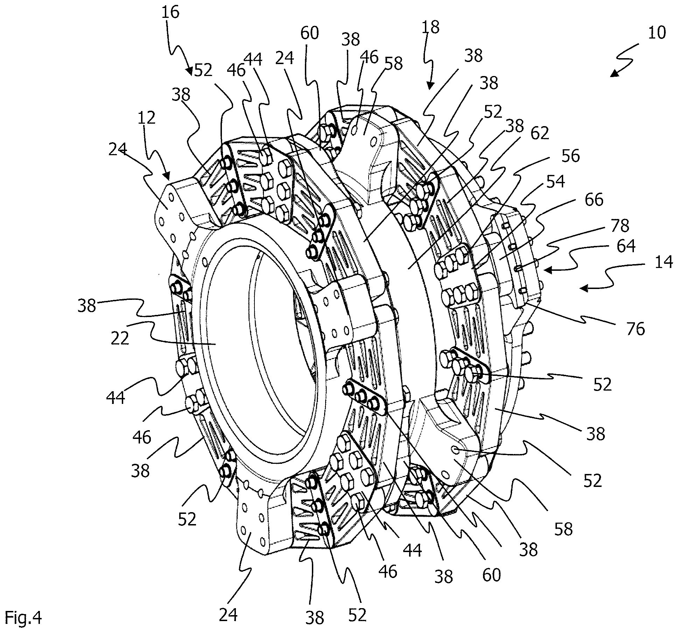

Figur 4 zeigt eine perspektivische Ansicht der Kupplungsvorrichtung 10, in der die Abstützeinrichtungen 36 und 48 sowie die Abdeckung 30 der Flanscheinrichtung 14 entfernt wurden. Der Flansch 12 hat die Flanscharme 24, die sich ausgehend von dem nabenförmigen Abschnitt 22 erstrecken. Der nabenförmige Abschnitt 22 erstreckt sich durch die Kupplungselemente 38 hindurch in Richtung des Zwischenstücks 20. Die Flanscharme 24 sind mit den fadenverstärkten Kupplungselementen 38 verbunden. Die fadenverstärkten Kupplungselemente 38 weisen in ihrem zentralen Bereich Umlenkelemente (nicht gezeigt) auf, durch die sich Verbindungselemente 52 erstrecken. Die Kupplungselemente 38 sind über die Verbindungselemente 46 mit den Armen 60 des Zwischenstücks 20 verbunden. Die Arme 58 des Zwischenstücks 20 sind mit den fadenverstärkten Kupplungselementen 38 der Kupplung 18 ebenfalls über Verbindungselemente 74 verbunden. Die Kupplungselemente 38 der Kupplung 18 weisen ebenfalls in ihrem zentralen Bereich nicht gezeigte Umlenkelemente auf. Durch diese Umlenkelemente erstrecken sich die Verbindungselemente 52, die die fadenverstärkten Kupplungselemente 38 mit der Abstützeinrichtung 48 (siehe Figur 1) verbinden. Über die Verbindungselemente 56 sind die fadenverstärkten Kupplungselemente 38 mit den Flanscharmen 66 des Flanschs 64 der Flanscheinrichtung 14 verbunden. Die Verbindungselemente 46, 52, 56 und 74 können Schrauben sein. Insbesondere können die Verbindungselemente 46, 52, 56 und 74 Schrauben mit einem Sechskantkopf sein.

Die Flanscharme 66 weisen eine Ausnehmung 76 auf, an der sich die Abdeckung 30 (siehe Figur 1) abstützen kann. In der Ausnehmung 76 sind Verbindungselemente 78 erkennbar, über die die Abdeckung 30 an den Flanscharmen 66 befestigt werden kann.

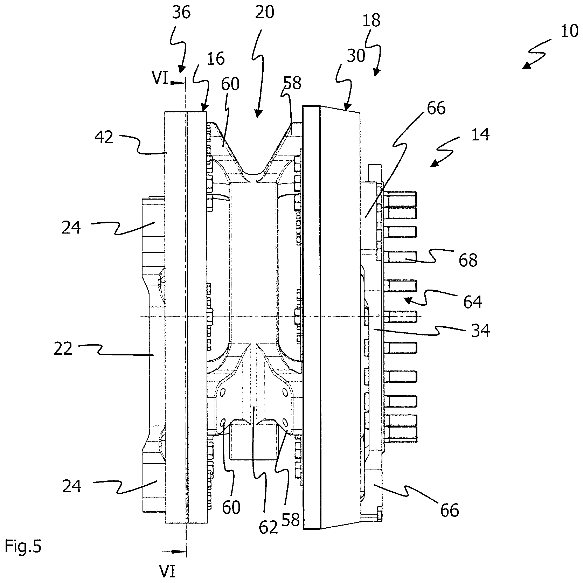

Figur 5 zeigt eine weitere Draufsicht der Kupplungsvorrichtung 10. In Figur 5 sind der Flansch 12, die Abstützeinrichtung 36 der Kupplung 16, das Zwischenstück 20, die Abdeckung 30, die Kupplung 18 und die Flanscheinrichtung 14 gezeigt. Das Zwischenstück 20 weist den rohrförmigen Abschnitt 62 und die Arme 58, 60 auf. Die Arme 58 und 60 erstrecken sich radial auswärts von dem rohrförmigen Abschnitt 62. Das Zwischenstück 20 ist über die Arme 60 mit der ersten Kupplung 16 und über die Arme 58 mit der zweiten Kupplung 18 verbunden.

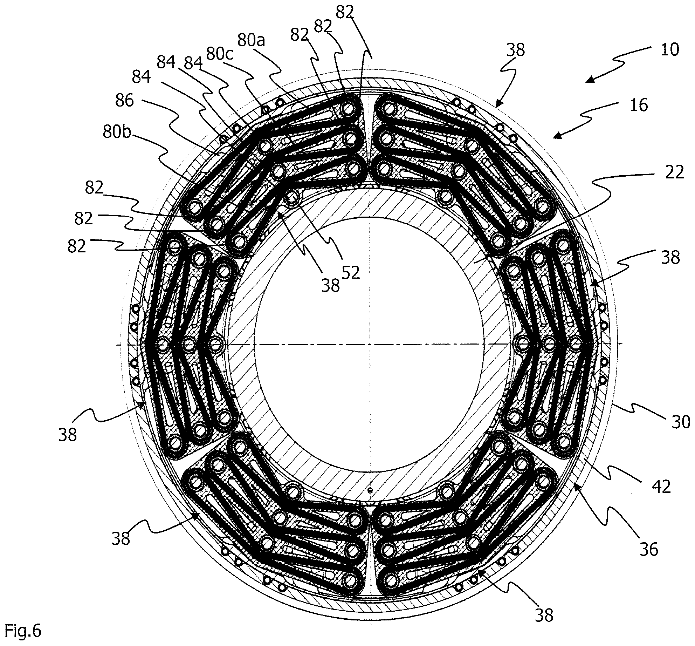

Figur 6 zeigte eine Schnittansicht entlang der Schnittlinie VI-VI in Figur 5. Figur 6 zeigt somit eine Schnittansicht der Kupplung 16 und der Abstützeinrichtung 36. In Figur 6 ist der nabenförmige Abschnitt des Flanschs 12 und das ringförmige Element 42 der Abstützeinrichtung 36 erkennbar. In radialer Richtung zwischen dem nabenförmigen Abschnitt 22 des Flanschs 12 und dem ringförmigen Element 42 der Abstützeinrichtung 36 sind die fadenverstärkten Kupplungselemente 38 angeordnet. Radial außen um die Abstützeinrichtung 36 herum erstreckt sich in der Ansicht gemäß Figur 4 die Abdeckung 30, die nicht im Schnitt dargestellt ist. In der im Schnitt dargestellten Abstützeinrichtung 36 sind mehrere Öffnungen erkennbar, durch die sich Schrauben erstrecken, um die beiden Teile der Abstützeinrichtung 36 zu verbinden.

Die fadenverstärkten Kupplungselemente 38 weisen jeweils drei Fadenpakete 80a, 80b und 80c auf. Jedes der Fadenpakete 80a, 80b und 80c umschlingt jeweils zwei Buchsen 82. Im Bereich zwischen den beiden Buchsen 82 sind Umlenkelemente 84 vorgesehen, an denen sich die Fadenpakete 80a, 80b und 80c abstützen können. Die Umlenkelemente 84 zwingen den Fadenpaketen 80a, 80b und 80c einen Knick oder eine Krümmung auf. Dadurch weist das Kupplungselement 38 insgesamt eine geknickte bzw. abgewinkelte Form auf. Durch die Umlenkelemente 84 erstrecken sich die Verbindungselemente 52, um die Kupplungselemente 38 mit der Abstützeinrichtung 36 bzw. mit den Abstützelementen 38 zu verbinden.

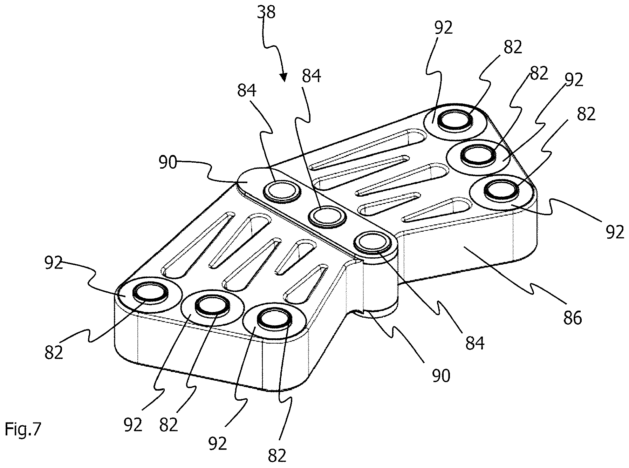

Figur 7 zeigt eine perspektivische Ansicht eines fadenverstärkten Kupplungselements 38 gemäß einem ersten Ausführungsbeispiel. Das fadenverstärkte Kupplungselement 38 weist sechs Buchsen 82 und Umlenkelemente 84 auf. Die Umlenkelemente 84 sind in einem Bereich zwischen den Buchsen 82 angeordnet. Die Umlenkelemente 84 sind über Verbindungselemente 90 miteinander verbunden, die an den axialen Enden der Umlenkelemente 84 angeordnet sind. Die Umlenkelemente 84 sind buchsenförmig ausgebildet. An den Buchsen 82 sind Bundelemente 92 erkennbar, die in Figur 7 nicht gezeigte Fadenpakete an den Buchsen 82 halten.

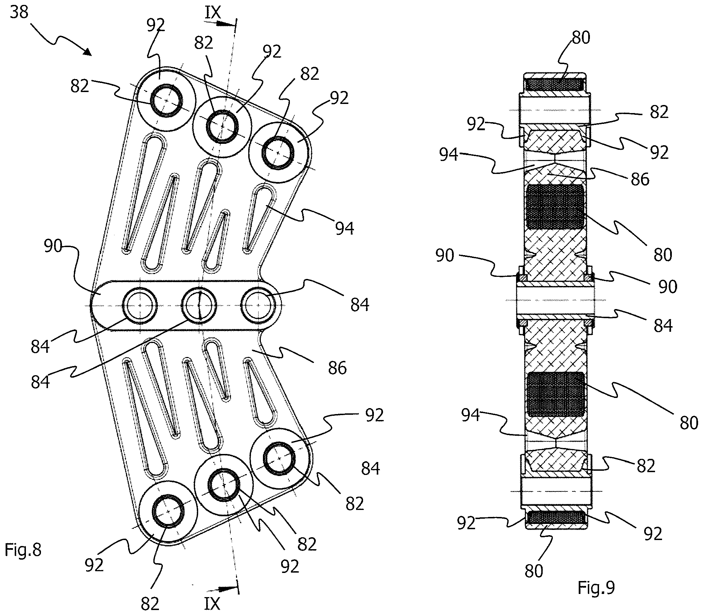

Figur 8 zeigt eine Draufsicht des fadenverstärkten Kupplungselements 38 gemäß Figur 7. Die Buchsen 82, die Bundelementen 92, die Umlenkelemente 84 und die plattenförmigen Verbindungselemente 90 sind teilweise in den elastischen Körper 86 eingebettet. In dem elastischen Körper 86 sind Ausnehmungen oder Aussparungen 94 erkennbar, die zwischen den in Figur 9 nicht gezeigten Strängen eines Fadenpakets 80 in dem elastischen Körper 86 ausgebildet sind.

Figur 9 zeigt eine Schnittansicht entlang der Schnittlinie IX-IX in Figur 8. In Figur 9 ist das Fadenpaket 80 gezeigt, das aufgrund des Verlaufs der Schnittlinie IX-IX an vier Stellen im Schnitt dargestellt ist. Das Fadenpaket 80 umschlingt die Buchsen 82. An den Buchsen 82 sind die Bundelemente 92 vorgesehen, die sich ausgehend von dem rohrförmigen Abschnitt der Buchsen 82 in radialer Richtung erstrecken. Die Bundelemente 92 können einstückig mit den Buchsen 82 ausgebildet sein. Die Buchsen 92 halten das Fadenpaket 80 in seiner vorbestimmten axialen Position an der Buchse 82. Die Buchsen 82 mit den daran ausgebildeten Bundelementen 92 haben eine spulenförmige Gestalt.

Im Bereich zwischen den beiden Buchsen 82 ist das Umlenkelement 84 gezeigt. Das Umlenkelement 84 wird nicht bzw. nur kaum von dem Fadenpaket 80 umschlungen. Das Fadenpaket 80 läuft entlang des Umlenkelements 84 und legt sich in einem Bereich mit einem seiner Stränge an die Außenumfangsfläche des Umlenkelements 84 an. Ferner sind in den elastischen Körper 86 die Ausnehmungen bzw. Aussparungen 94 erkennbar.

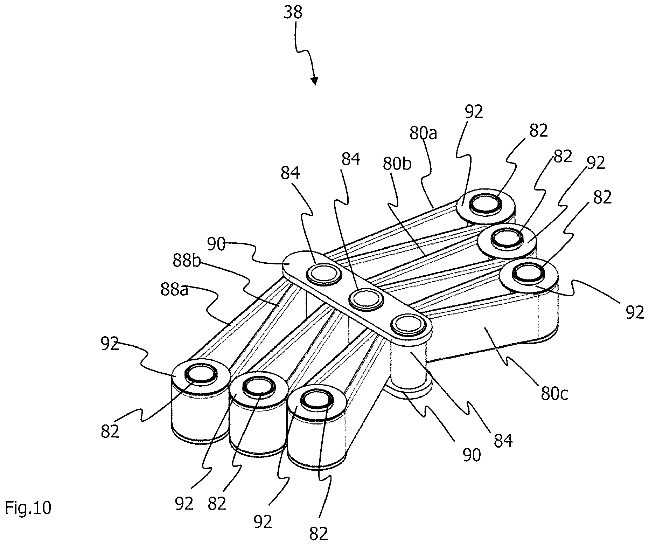

Figur 10 zeigt eine perspektivische Ansicht des Grundkörpers des fadenverstärkten Kupplungselements 38. In Figur 10 sind die drei Fadenpakete 80a, 80b, 80c des fadenverstärkten Kupplungselements 38 erkennbar. Jedes der Fadenpakete 80a, 80b, 80c umschlingt zwei Buchsen 82. Jedes der Fadenpakete 80a, 80b, 80c bildet mit zwei Buchsen 82, die von dem Fadenpaket 80a, 80b, 80c umschlungen werden, eine Einheit. Zwischen den Buchsen 82 sind die Umlenkelemente 84 vorgesehen, die die Fadenpakete 80a, 80b, 80c umlenken und abstützen können. Die Umlenkelemente 84 sind über plattenförmige Verbindungselemente 90 miteinander verbunden. Ein Umlenkelement 84 nähert die beiden von dem Fadenpaket zwischen den Buchsen 82 gebildeten Stränge 88a und 88a aneinander an, sodass der Strang 88b einen stärker geknickten Verlauf als der Strang 88a einnimmt. Der Strang 88a ist verglichen mit dem Knick des Strangs 88b weniger geknickt. Jedes der Fadenpakete 80a, 80b, 80c verläuft somit geknickt zwischen den Buchsen 82.

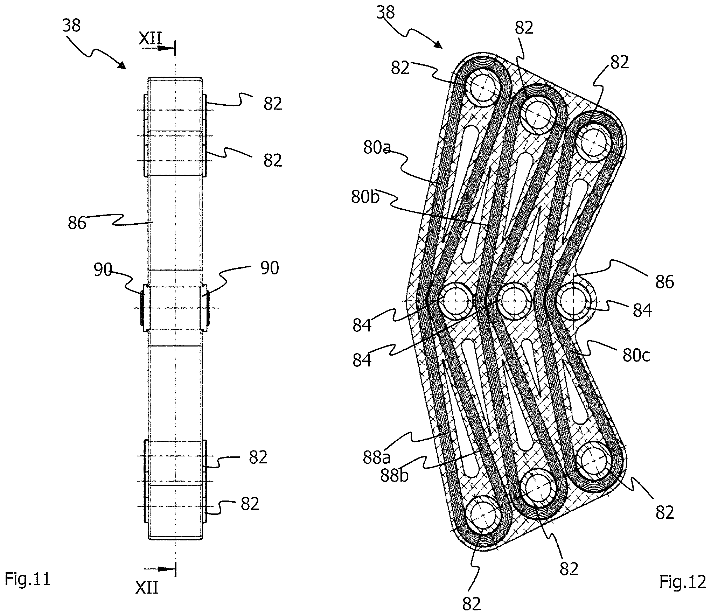

Figur 11 zeigt eine Seitenansicht des fadenverstärkten Kupplungselements 38. In der Ansicht gemäß Figur 11 sind der elastische Körper 86, die teilweise darin eingebetteten Verbindungsplatten 90 und die Enden der Buchsen 82 erkennbar.

Figur 12 zeigt eine Schnittansicht entlang der Schnittlinie XII-XII in Figur 11. Die Fadenpakete 80a, 80b, 80c umschlingen jeweils genau zwei Buchsen. Im Bereich zwischen den Buchsen bilden die Fadenpakete 80a, 80b, 80c zwei Stränge 88a und 88b. Die Umlenkelemente 84 lenken diese Stränge 88a und 88b im Bereich zwischen den Buchsen 82 um. Durch diese Umlenkung werden die Stränge 88a und 88b im Bereich der Umlenkelemente 84 aneinander angenähert. Der Strang 88b liegt an einem Bereich der Außenumfangsfläche eines Umlenkelements 84 an. Der Strang 88a liegt in diesem Bereich, d. h. im Bereich des Umlenkelements 84 an dem Strang 88b an. Das Fadenpaket 80a, 80b, 80c nimmt somit einen abgewinkelten Verlauf ein. Die Umlenkelemente 84 unterteilen die Fadenpakete 80a, 80b, 80c in zwei Schenkel, von denen jeder eine Buchse 82 aufweist, und die abgewinkelt zueinander verlaufen. Die Buchsen 82, die Fadenpakete 80a, 80b, 80c und Umlenkelemente 84 sind in den elastischen Körper 86 eingebettet.

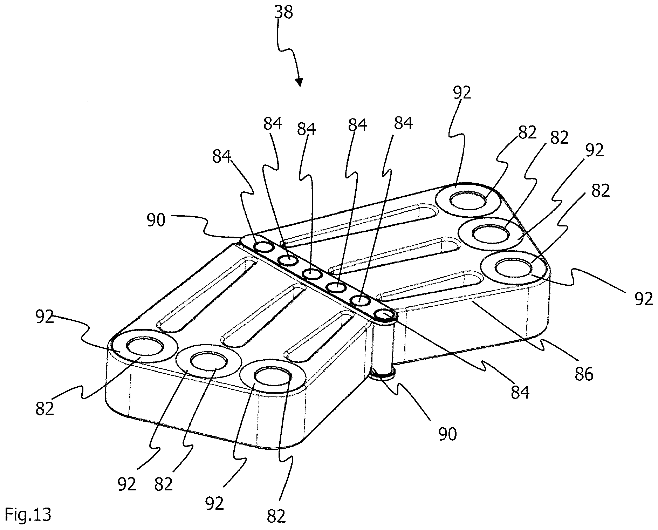

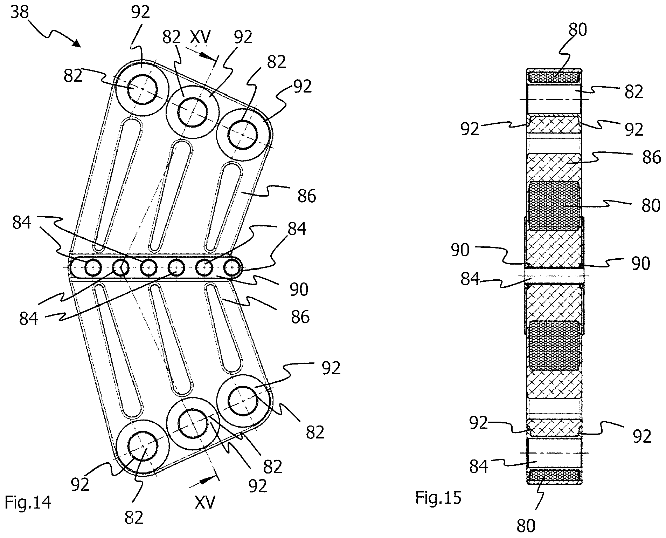

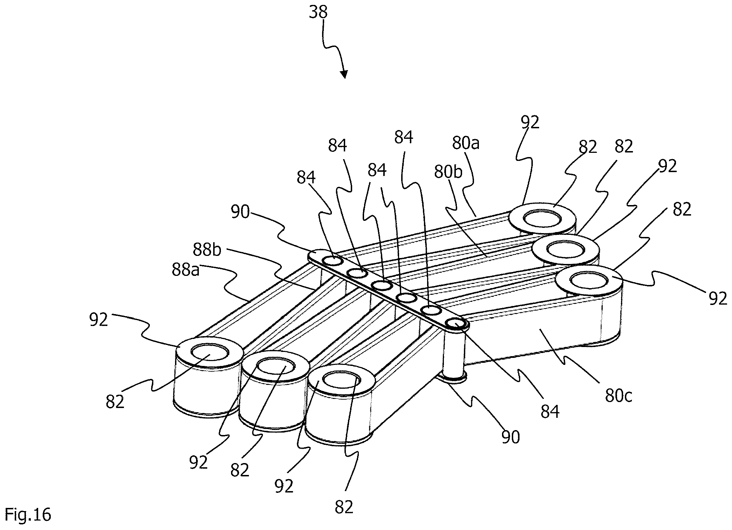

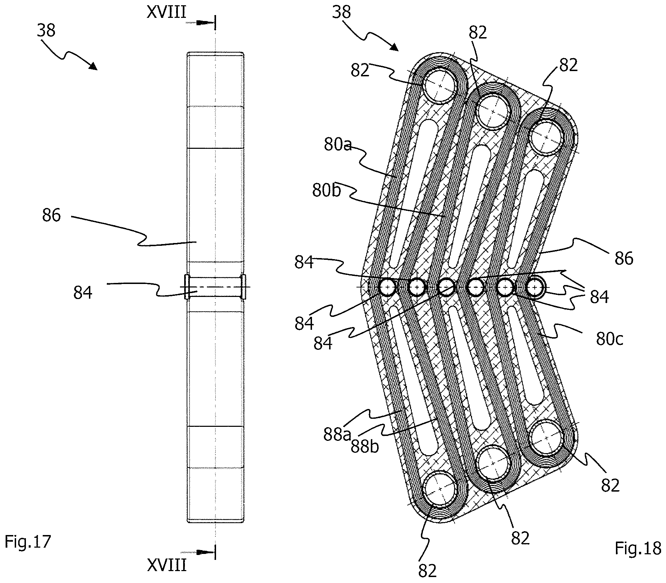

Die Figuren 13 bis 18 zeigen ein fadenverstärktes Kupplungselement 38 gemäß einem zweiten Ausführungsbeispiel. Der wesentliche Unterschied zu dem ersten Ausführungsbeispiel gemäß der Figuren 7 bis 12 liegt darin, dass jedem Fadenpaket 80a, 80b, 80c zwei Umlenkelemente 84 zugeordnet sind. Jeder Strang 88a, 88b eines Fadenpakets 80a, 80b, 80c wird im Bereich zwischen den Buchsen 82 von einem eigenen Umlenkelement 84 umgelenkt. Die Stränge 88a, 88b der Fadenpakete 80a, 80b, 80c liegen somit im Bereich des Umlenkelements 84 nicht mehr aneinander an, sondern werden von einem Umlenkelement 84 voneinander getrennt. Jeder der Stränge 88a, 88b weist einen von einem Umlenkelement 84 eingestellten Knick auf. Die Umlenkelemente 84 werden über die plattenförmigen Verbindungselemente 90 miteinander verbunden. Die Umlenkelemente 84 weisen verglichen mit dem voranstehend beschriebenen Ausführungsbeispiel einen verringerten Durchmesser auf.

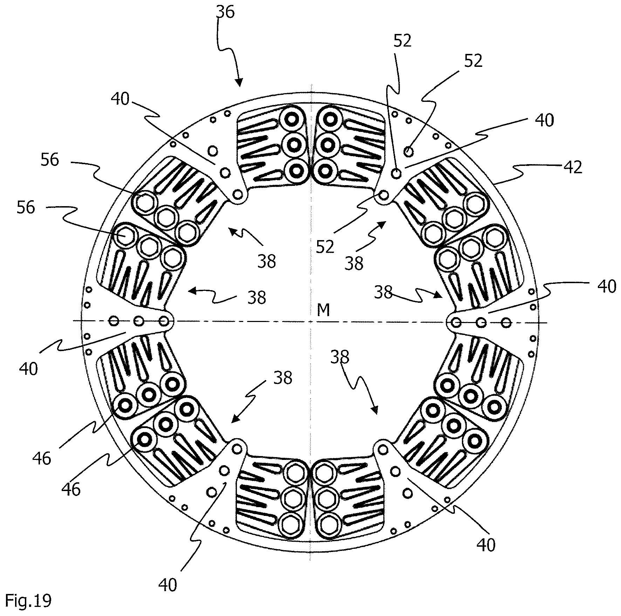

Figur 19 zeigt eine Vorderansicht der Abstützeinrichtung 36 der ersten Kupplung 18 (siehe Figur 1) mit daran angebrachten fadenverstärkten Kopplungselementen 38 gemäß dem in den Figuren 7 bis 12 gezeigten ersten Ausführungsbeispiel. Die Abstützeinrichtung 36 weist den ringförmigen Abschnitt 42 und Abstützelemente 40 auf, die sich ausgehend von dem ringförmigen Abschnitt 42 radial einwärts erstrecken. Die Abstützelemente 40 sind mit den Umlenkelementen 84 (siehe Figuren 7 bis 12) über Schrauben 52 verbunden. Die Abstützeinrichtung 36 stützt mit ihren Abstützelementen 40 einen mittleren Bereich der fadenverstärkten Kupplungselemente 38 ab, in dem die Umlenkelemente 84 angeordnet sind. Die fadenverstärkten Kupplungselemente 38 können über die Schrauben 56 mit dem ersten Flansch 12 verschraubt werden. Die Schrauben 56 werden dazu durch die Buchsen 82 (siehe Figuren 7 bis 12) geführt. In gleicher Weise können Schrauben 46 durch die Buchsen 82 geführt werden, um die fadenverstärkten Kupplungselemente 38 mit dem Zwischenstück 20 (siehe Figur 1) zu verbinden.

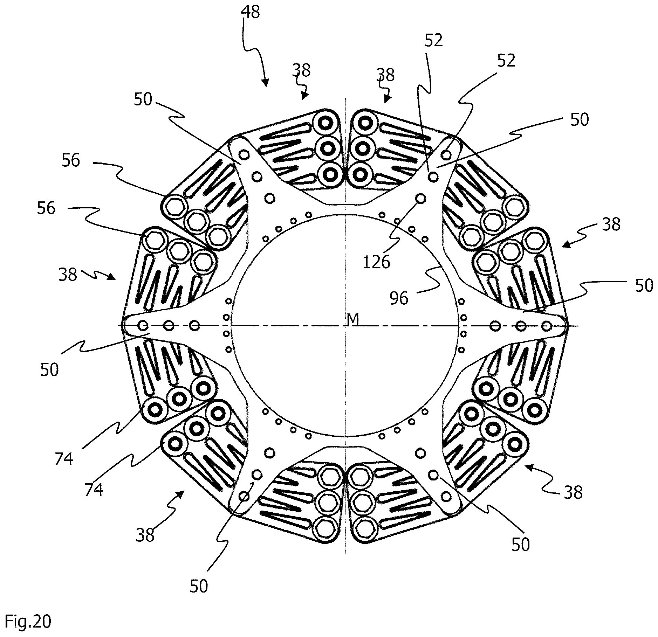

Figur 20 zeigt eine Vorderansicht der Abstützeinrichtung 48 der zweiten Kupplung 18. Die Abstützeinrichtung 48 weist einen ringförmigen Abschnitt 96 und Abstützelemente 50 auf, die sich ausgehend von dem ringförmigen Abschnitt 96 radial auswärts erstrecken. Der ringförmige Abschnitt 96 erstreckt sich radial innerhalb der fadenverstärkten Kupplungselemente 38. Die fadenverstärkten Kupplungselemente 38 sind über die Schrauben 52 mit den Abstützelementen 50 verbunden. Die Schrauben 52 werden dazu durch die Umlenkelemente 84 (siehe Figuren 7 bis 12) geführt. Die fadenverstärkten Kupplungselemente 38 können über die Schrauben 56 mit dem zweiten Flansch 64 (siehe Figur 1) verschraubt werden. Die Schrauben 74 verbinden die fadenverstärkten Kupplungselemente 38 mit dem Zwischenstück 20 (siehe Figur 1) zu verbinden. Die sich radial auswärts erstreckenden Abstützelemente 50 halten die Umlenkelemente 84 und damit den mittleren Bereich der fadenverstärkten Kupplungselemente 38 in einer vorbestimmten radialen Position. Dadurch behält die Einheit aus Abstützeinrichtung 48 und den Kopplungselementen 38 seinen vieleckförmigen Aufbau bei.

In Abhängigkeit ihrer Belastung (Zug oder Druck) können die fadenverstärkten Kupplungselemente 38 ohne die Abstützeinrichtung 36, 48 nach radial innen gezogen oder nach radial außen gedrückt werden. Die Abstützeinrichtung 36, 48 stützt die Kupplungselemente 38 in radialer Richtung ab. Die Abstützeinrichtung 36, 48 hält die fadenverstärkten Kupplungselemente 38 in ihrer vorbestimmten radialen Position. Dies gilt insbesondere für den Bereich der Umlenkelemente 84, die mit den Abstützelementen 40, 50 verbunden sind. Die Abstützelemente 40, 50 verhindern insbesondere, dass sich der zentrale Bereich mit den Umlenkelementen 84 der fadenverstärkten Kupplungselemente 38 zwischen den Buchsen 82 in Richtung der Mittelachse M verlagert. Die Abstützelemente 40, 50 sorgen dementsprechend dafür, dass die Kupplung bzw. die Einheit aus der Abstützeinrichtung 36, 48 und den fadenverstärkten Kopplungselementen 38 auch im Betrieb der Kupplung ihren vieleckförmigen Aufbau beibehält. Dadurch können große Beugewinkel ausgeglichen und der radiale Bauraum optimal ausgenutzt werden, da ein Vieleck mit möglichst vielen Ecken einen kreisförmigen oder hohlzylinderförmigen Bauraum optimal ausfüllen kann.

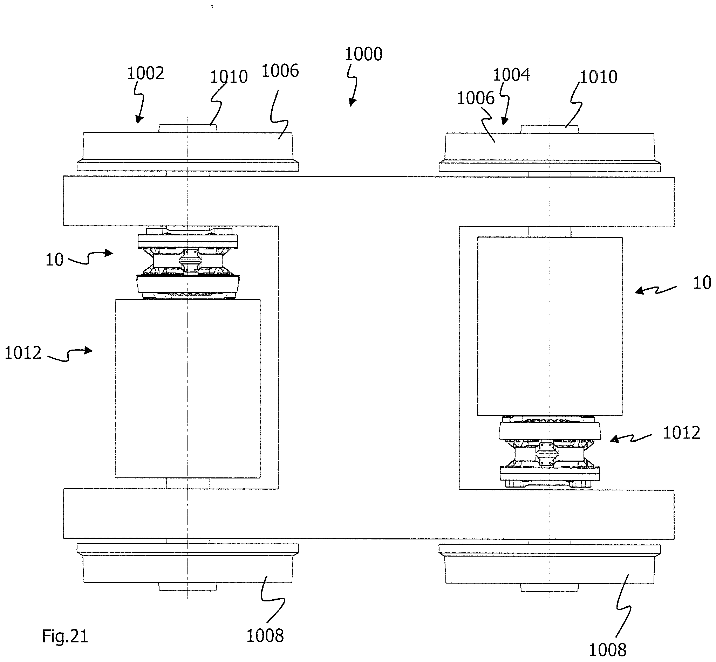

Figur 21 zeigt eine Draufsicht eines Drehgestells 1000. Das Drehgestell 1000 weist zwei Radsätze 1002 und 1004 auf. Jeder Radsatz 1002, 1004 weist zwei Räder 1006, 1008 auf, die durch eine Radsatzwelle 1010 miteinander verbunden werden. Koaxial mit der Radsatzwelle 1010 ist die Kupplungsvorrichtung 10 angeordnet. Die Kupplungsvorrichtung 10 verbindet den Radsatz 1002, 1004 mit dem Motor 1012. Die Kupplung 10 kann mit der Radsatzwelle 1010 und mit einer Motorausgangswelle (nicht gezeigt) des Motors 1012 gekoppelt sein. Die Kupplung 10 und der Motor 1012 können koaxial mit der Radsatzwelle 1010 angeordnet sein. Der erste Flansch 12 (siehe Figur 1) der Kupplungsvorrichtung 10 kann drehfest mit der Radsatzwelle 1010 verbunden sein. Der Flansch 12 kann beispielsweise auf die Radsatzwelle 1010 aufgepresst sein. Der zweite Flansch 64 kann mit einer Motorausgangswelle (nicht gezeigt) des Motors 1012 verbunden sein. Dazu können die Verbindungselemente 68 des Flanschs 64 mit der Motorausgangswelle verbunden werden. Die Radsatzwelle 1010 erstreckt sich durch die Kupplungsvorrichtung 10 und auch durch den Motor 1012. Bei dem Motor 1012 kann es sich um einen Traktionsmotor handeln, der den Radsatz 1002, 1004 ohne Getriebe antreiben kann.

Wie insbesondere in Figur 21 erkennbar ist, benötigt die Kupplung 10 in axialer Richtung sehr wenig Bauraum und kann dennoch einen großen Beugewinkel aufnehmen, um Relativbewegungen zwischen dem Motor 1012 und dem Radsatz 1002, 1004 ausgleichen zu können.

Die voranstehend beschriebenen Abstützeinrichtungen stützen die fadenverstärkten Gelenkvorrichtungen in radialer Richtung ab. Die Abstützeinrichtung kann die fadenverstärkten Gelenkvorrichtungen in ihrer vorbestimmten radialen Position halten. Die Abstützeinrichtungen verhindern, dass sich die fadenverstärkten Gelenkvorrichtungen aufgrund der im Betrieb der Kupplung bzw. der fadenverstärkten Gelenkvorrichtung entstehenden Reaktionskräfte nach radial innen oder radial nach außen bewegen. Die Abstützelemente der Abstützeinrichtung sorgen dementsprechend dafür, dass die Kupplung auch im Betrieb ihren vieleckförmigen Aufbau beibehält. Dadurch können große Beugewinkel ausgeglichen und der radiale Bauraum optimal ausgenutzt werden, da ein Vieleck mit möglichst vielen Ecken einen kreisförmigen oder hohlzylinderförmigen Bauraum optimal ausfüllen kann.

## Patentansprüche

1. Kupplungsvorrichtung (10), insbesondere für einen Fahrzeugantrieb, mit:
wenigstens einer ersten Kupplung (16), die wenigstens eine erste fadenverstärkte Gelenkvorrichtung (FG1) aufweist, wobei die erste fadenverstärkte Gelenkvorrichtung (FG1) wenigstens ein Fadenpaket (80) aufweist, das in wenigstens einen elastischen Körper (86) eingebettet ist,
**dadurch gekennzeichnet, dass**
wobei die wenigstens eine erste Kupplung (16) wenigstens eine Abstützeinrichtung (36) aufweist, die mit der ersten fadenverstärkten Gelenkvorrichtung (FG1) verbunden ist, wobei die wenigstens eine Abstützeinrichtung (36) die erste fadenverstärkten Gelenkvorrichtung (FG1) in radialer Richtung abstützt.

2. Kupplungsvorrichtung (10) nach Anspruch 1, wobei die Kupplungsvorrichtung (10) ferner aufweist:
wenigstens eine zweite Kupplung (18), die wenigstens eine zweite fadenverstärkte Gelenkvorrichtung (FG2) aufweist, wobei die zweite fadenverstärkte Gelenkvorrichtung (FG2) wenigstens ein Fadenpaket (80) aufweist, das in wenigstens einen elastischen Körper (86) eingebettet ist, und
wenigstens ein Zwischenstück (20), das die erste Kupplung (16) und die zweite Kupplung (18) miteinander verbindet.

3. Kupplungsvorrichtung nach Anspruch 2,
wobei die wenigstens eine zweite Kupplung (18) wenigstens eine Abstützeinrichtung (48) aufweist, die mit der zweiten fadenverstärkten Gelenkvorrichtung (FG2) verbunden ist, wobei die wenigstens eine Abstützeinrichtung (48) die zweite fadenverstärkten Gelenkvorrichtung (FG1) in radialer Richtung abstützt.

4. Kupplungsvorrichtung (10) nach einem der Ansprüche 1 bis 3,
wobei die wenigstens eine Abstützeinrichtung (36, 48) fliegend gelagert ist, und/oder
wobei die wenigstens eine Abstützeinrichtung (36, 48) mehrere Abstützelemente (40, 50) aufweist, die sich in radialer Richtung erstrecken und mit der fadenverstärkten Gelenkvorrichtung (FG1, FG2) verbunden sind.

5. Kupplungsvorrichtung (10) nach einem der Ansprüche 1 bis 4,
wobei die wenigstens eine Abstützeinrichtung (36, 48) wenigstens einen Abschnitt (36) aufweist, der sich radial außerhalb und/oder radial innerhalb der ersten oder zweiten fadenverstärkten Gelenkvorrichtung (FG1, FG2) erstreckt und die Abstützelemente miteinander verbindet.

6. Kupplungsvorrichtung (10) nach einem der Ansprüche 1 bis 5,
wobei die wenigstens eine Abstützeinrichtung (36, 48) das wenigstens eine Fadenpaket (80) der ersten fadenverstärkten Gelenkvorrichtungen (FG1) oder der zweiten fadenverstärkten Gelenkvorrichtungen (FG2) in radialer Richtung abstützt, und/oder
wobei das wenigstens eine Zwischenstück (20) fliegend gelagert ist.

7. Kupplungsvorrichtung (10) nach einem der Ansprüche 1 bis 6,
wobei die erste Kupplung (18) mit einem ersten Flansch (12) verbunden ist, der einen nabenförmigen Abschnitt (22) hat, und/oder die zweite Kupplung (18) mit einem zweiten Flansch (64) verbunden ist, der mit einem Verbindungsabschnitt (34) zur Aufnahme von mehreren Verbindungselementen (68) ausgebildet ist.

8. Kupplungsvorrichtung (10) nach Anspruch 7,
wobei der erste Flansch (12) und der zweite Flansch (64) jeweils mehrere erste und zweite Flanscharme (24, 66) aufweisen, die über die erste und die zweite fadenverstärkten Gelenkvorrichtung (FG1, FG2) mit Armen (58, 60) des Zwischenstücks (20) verbunden sind, wobei Abstützelemente (40, 50) in Umfangsrichtung zwischen den Flanscharmen (24) des ersten Flanschs (16) und den Armen (60) des Zwischenstücks (20) oder den Flanscharmen (66) des zweiten Flanschs (64) und den Armen (58) des Zwischenstücks (20) angeordnet sind.

9. Kupplungsvorrichtung (10) nach einem der Ansprüche 1 bis 8,
wobei sich die erste fadenverstärkte Gelenkvorrichtung (FG1) und/oder die zweite fadenverstärkte Gelenkvorrichtung (FG2) aus mehreren fadenverstärkten Kuppelungselementen (38) zusammensetzt, die jeweils wenigstens einen elastischen Körper (86) und wenigstens ein Fadenpaket (80) aufweisen.

10. Kupplungsvorrichtung (10) nach Anspruch 9,
wobei ein fadenverstärktes Kupplungselement (38) einen Flanscharm (24) des ersten Flanschs (12), einen Arm (60) des Zwischenstücks (20) und ein Abstützelement (40) miteinander verbindet, und/oder wobei ein fadenverstärktes Kupplungselement (38) einen Flanscharm (66) des zweiten Flanschs (14), einen Arm (58) des Zwischenstücks (20) und ein Abstützelement (40) miteinander verbindet.

11. Kupplungsvorrichtung (10) nach Anspruch 9 oder 10,
wobei die Kupplungselemente (38) jeweils das wenigstens eine Fadenpaket (80, 80a, 80b, 80c), wenigstens zwei Buchsen (82), wobei das wenigstens eine Fadenpaket (80, 80a, 80b, 80c) die wenigstens zwei der Buchsen (82) umschlingt, und wenigstens ein Umlenkelement (84) aufweisen, wobei sich das wenigstens eine Fadenpaket (80, 80a, 80b, 80c) an das wenigstens eine Umlenkelement (84) anlegt.

12. Kupplungsvorrichtung (10) nach Anspruch 11,
wobei das wenigstens eine Umlenkelement (84) zwischen den wenigstens zwei Buchsen (82) angeordnet ist, und/ oder
wobei das wenigstens eine Umlenkelement (84) derart positioniert ist, dass das wenigstens eine Fadenpaket (80, 80a, 80b, 80c) sich im Bereich zwischen den Buchsen (82) mit wenigstens einem Knick oder einer Krümmung erstreckt.

13. Kupplungsvorrichtung (10) nach einem der Ansprüche 11 oder 12,
wobei das fadenverstärkte Kupplungselement (38) mehrere Fadenpakete (80, 80a, 80b, 80c) aufweist, wobei jedem Fadenpaket (80, 80a, 80b, 80c) wenigstens ein Umlenkelement (84) zugeordnet ist, wobei die Umlenkelemente (84) vorzugsweise miteinander verbunden sind, und/oder
wobei das wenigstens eine Fadenpaket (80, 80a, 80b, 80c) im Bereich zwischen den wenigstens zwei Buchsen (82) zwei Stränge (88a, 88b) bildet, wobei sich zumindest ein Strang (88a, 88b) des wenigstens einen Fadenpakets (80, 80a, 80b, 80c) an das wenigstens eine Umlenkelement (84) anlegt.

14. Kupplungsvorrichtung (10) nach Anspruch 13,
wobei dem wenigstens einen Fadenpaket (80, 80a, 80b, 80c) wenigstens zwei Umlenkelemente (84) zugeordnet sind, wobei sich jeweils ein Strang (88a, 88b) des wenigstens einen Fadenpakets (80, 80a, 80b, 80c) an eines der Umlenkelemente (84) anlegt.

15. Drehgestell (1000) für ein Schienenfahrzeug, mit:
wenigstens einem Radsatz (1002, 1004), der eine Radsatzwelle (1010) aufweist,
wenigstens einem Motor (1012), und
wenigstens einer Kupplungsvorrichtung (10) nach einem der Ansprüche 1 bis 14,
wobei die Kupplungsvorrichtung (10) den Motor (1012) mit der Radsatzwelle (1010) koppelt.

16. Drehgestell (1000) nach Anspruch 15,
wobei der Motor (1012) und/oder die wenigstens eine Kupplungsvorrichtung (10) koaxial mit der Radsatzwelle (1010) angeordnet sind, und/oder
wobei der erste Flansch (12) der Kupplungsvorrichtung (10) drehfest mit der Radsatzwelle (1010) verbunden ist, und/oder der zweite Flansch (14) der Kupplungsvorrichtung (10) über den Verbindungsabschnitt (34) mit einer Motorausgangswelle des Motors (1012) verbunden ist.

17. Schienenfahrzeug mit wenigstens einer Kupplungsvorrichtung (10) nach einem der Ansprüche 1 bis 14 oder wenigstens einem Drehgestell (1000) nach Anspruch 15 oder 16.

## Claims

1. A coupling device (10), in particular for a vehicle drive system, comprising:
at least one first coupling (16) comprising at least one first thread-reinforced joint device (FG1), wherein the first thread-reinforced joint device (FG1) comprises at least one thread package (80) embedded in at least one elastic body (86),
**characterized in that**
the at least one first coupling (16) comprises at least one support means (36) connected to the first thread-reinforced joint device (FG1), wherein at least one support means (36) supports the first thread-reinforced joint device (FG1) in the radial direction.

2. The coupling device (10) of claim 1, wherein the coupling device (10) further comprises:
at least one second coupling (18) comprising at least one second thread-reinforced joint device (FG2), wherein the second thread-reinforced joint device (FG2) comprises at least one thread package (80) embedded in at least one elastic body (86), and
at least one intermediate piece (20) connecting the first coupling (16) and the second coupling (18).

3. The coupling device of claim 2,
wherein the at least one second coupling (18) comprises at least one support means (48) connected to the second thread-reinforced joint device (FG2), wherein at least one support means (48) supports the second thread-reinforced joint device (FG1) in the radial direction.

4. The coupling device (10) of any one of claims 1 to 3,
wherein the at least one support means (36, 48) is cantilever-mounted, and/or
wherein the at least one support means (36, 48) comprises a plurality of support members (40, 50) extending in the radial direction and connected to the thread-reinforced joint device (FG1, FG2).

5. The coupling device (10) of any one of claims 1 to 4,
wherein the at least one support means (36, 48) comprises at least one portion (36) extending radially outwardly and/or radially inwardly of the first or second thread-reinforced joint device (FG1, FG2) and connecting the support members to each other.

6. The coupling device (10) of any one of claims 1 to 5,
wherein the at least one support means (36, 48) supports the at least one thread package (80) of the first thread-reinforced joint device (FG1) or the second thread-reinforced joint device (FG2) in the radial direction, and/or
wherein the at least one intermediate piece (20) is cantilever-mounted.

7. The coupling device (10) of any one of claims 1 to 6,
wherein the first coupling (18) is connected to a first flange (12) having a hub-shaped portion (22), and/or the second coupling (18) is connected to a second flange (64) configured with a connecting portion (34) for receiving a plurality of connecting members (68).

8. The coupling device (10) of claim 7,
wherein the first flange (12) and the second flange (64) each comprise a plurality of first and second flange arms (24, 66) connected to arms (58, 60) of the intermediate piece (20) through the first and second thread-reinforced joint device (FG1, FG2), wherein support members (40, 50) are arranged circumferentially between the flange arms (24) of the first flange (16) and the arms (60) of the intermediate piece (20) or the flange arms (66) of the second flange (64) and the arms (58) of the intermediate piece (20).

9. The coupling device (10) of any one of claims 1 to 8,
wherein the first thread-reinforced joint device (FG1) and/or the second thread-reinforced joint device (FG2) are composed of a plurality of thread-reinforced coupling members (38), each comprising at least one elastic body (86) and at least one thread package (80).

10. The coupling device (10) of claim 9,
wherein a thread-reinforced coupling member (38) connects a flange arm (24) of the first flange (12), an arm (60) of the intermediate piece (20), and a support member (40) to each other, and/or wherein a thread-reinforced coupling member (38) connects a flange arm (66) of the second flange (14), an arm (58) of the intermediate piece (20), and a support member (40) to each other.

11. The coupling device (10) of claim 9 or 10,
wherein the coupling members (38) each comprise the at least one thread package (80, 80a, 80b, 80c), at least two bushings (82), the at least one thread package (80, 80a, 80b, 80c) wrapping around the at least two of the bushings (82), and at least one deflection member (84), the at least one thread package (80, 80a, 80b, 80c) abutting the at least one deflection member (84).

12. The coupling device (10) of claim 11,
wherein the at least one deflection member (84) is arranged between the at least two bushings (82), and/or
wherein the at least one deflection member (84) is positioned such that the at least one thread package (80, 80a, 80b, 80c) extends in the region between the bushings (82) with at least one kink or bend.

13. The coupling device (10) of any one of claims 11 or 12,
wherein the thread-reinforced coupling member (38) comprises a plurality of thread packages (80, 80a, 80b, 80c), each thread package (80, 80a, 80b, 80c) being assigned at least one deflection member (84), wherein the deflection members (84) are preferably connected to each other, and/or
wherein the at least one thread package (80, 80a, 80b, 80c) forms two strands (88a, 88b) in the region between the at least two bushings (82), wherein at least one strand (88a, 88b) of the at least one thread package (80, 80a, 80b, 80c) abuts the at least one deflection member (84).

14. The coupling device (10) of claim 13,
wherein the at least one thread package (80, 80a, 80b, 80c) is assigned at least two deflection members (84), wherein a respective strand (88a, 88b) of the at least one thread package (80, 80a, 80b, 80c) abuts one of the deflection members (84).

15. A bogie (1000) for a rail vehicle, comprising:
at least one wheel set (1002, 1004) having a wheel set shaft (1010),
at least one motor (1012), and
at least one coupling device (10) of any one of claims 1 to 14,
wherein the coupling device (10) couples the motor (1012) to the wheel set shaft (1010).

16. The bogie (1000) of claim 15,
wherein the motor (1012) and/or the at least one coupling device (10) are arranged coaxially with the wheel set shaft (1010), and/or
wherein the first flange (12) of the coupling device (10) is non-rotatably connected to the wheel set shaft (1010), and/or the second flange (14) of the coupling device (10) is connected to a motor output shaft of the motor (1012) through the connecting portion (34).

17. A rail vehicle comprising at least one coupling device (10) of any one of claims 1 to 14 or at least one bogie (1000) of claim 15 or 16.

## Revendications

1. Dispositif d'accouplement (10), en particulier pour un entraînement de véhicule, comportant :
au moins un premier accouplement (16) qui comprend au moins un premier dispositif d'articulation renforcé par fils (FG1), le premier dispositif d'articulation renforcé par fils (FG1) comprenant au moins un paquet de fils (80) noyé dans au moins un corps élastique (86),
**caractérisé en ce que**
ledit au moins un premier accouplement (16) comprend au moins un moyen de soutien (36) relié au premier dispositif d'articulation renforcé par fils (FG1), ledit au moins un moyen de soutien (36) soutenant le premier dispositif d'articulation renforcé par fils (FG1) dans la direction radiale.

2. Dispositif d'accouplement (10) selon la revendication 1, dans lequel le dispositif d'accouplement (10) comporte en outre :
au moins un deuxième accouplement (18) qui comprend au moins un deuxième dispositif d'articulation renforcé par fils (FG2), le deuxième dispositif d'articulation renforcé par fils (FG2) comprenant au moins un paquet de fils (80) noyé dans au moins un corps élastique (86), et
au moins une pièce intermédiaire (20) qui relie entre eux le premier accouplement (16) et le deuxième accouplement (18).

3. Dispositif d'accouplement selon la revendication 2,
dans lequel ledit au moins un deuxième accouplement (18) comprend au moins un moyen de soutien (48) relié au deuxième dispositif d'articulation renforcé par fils (FG2), ledit au moins un moyen de soutien (48) soutenant le deuxième dispositif d'articulation renforcé par fils (FG1) dans la direction radiale.

4. Dispositif d'accouplement (10) selon l'une des revendications 1 à 3,
dans lequel ledit au moins un moyen de soutien (36, 48) est monté en porte-à-faux, et/ou
dans lequel ledit au moins un moyen de soutien (36, 48) comprend plusieurs éléments de soutien (40, 50) qui s'étendent dans la direction radiale et sont reliés au dispositif d'articulation renforcé par fils (FG1, FG2).

5. Dispositif d'accouplement (10) selon l'une des revendications 1 à 4,
dans lequel ledit au moins un moyen de soutien (36, 48) comprend au moins une partie (36) qui s'étend radialement à l'extérieur et/ou radialement à l'intérieur du premier ou deuxième dispositif d'articulation renforcé par fils (FG1, FG2) et relie les éléments de soutien entre eux.

6. Dispositif d'accouplement (10) selon l'une des revendications 1 à 5,
dans lequel ledit au moins un moyen de soutien (36, 48) soutient dans la direction radiale ledit au moins un paquet de fils (80) des premiers dispositifs d'articulation renforcés par fils (FG1) ou des deuxièmes dispositifs d'articulation renforcés par fils (FG2), et/ou
dans lequel ladite au moins une pièce intermédiaire (20) est montée en porte-à-faux.

7. Dispositif d'accouplement (10) selon l'une des revendications 1 à 6,
dans lequel le premier accouplement (18) est relié à une première bride (12) qui a une partie (22) en forme de moyeu, et/ou le deuxième accouplement (18) est relié à une deuxième bride (64) qui est formée avec une partie de liaison (34) destinée à recevoir plusieurs éléments de liaison (68).

8. Dispositif d'accouplement (10) selon la revendication 7,
dans lequel la première bride (12) et la deuxième bride (64) comprennent chacune plusieurs premier et deuxième bras de bride (24, 66) reliés à des bras (58, 60) de la pièce intermédiaire (20) par l'intermédiaire des premier et deuxième dispositifs d'articulation renforcés par fils (FG1, FG2), des éléments de soutien (40, 50) étant disposés dans la direction circonférentielle entre les bras de bride (24) de la première bride (16) et les bras (60) de la pièce intermédiaire (20) ou les bras de bride (66) de la deuxième bride (64) et les bras (58) de la pièce intermédiaire (20).

9. Dispositif d'accouplement (10) selon l'une des revendications 1 à 8,
dans lequel le premier dispositif d'articulation renforcé par fils (FG1) et/ou le deuxième dispositif d'articulation renforcé par fils (FG2) sont composés de plusieurs éléments d'accouplement renforcés par fils (38) qui comprennent chacun au moins un corps élastique (86) et au moins un paquet de fils (80).

10. Dispositif d'accouplement (10) selon la revendication 9,
dans lequel un élément d'accouplement renforcé par fils (38) relie entre eux un bras de bride (24) de la première bride (12), un bras (60) de la pièce intermédiaire (20) et un élément de soutien (40), et/ou dans lequel un élément d'accouplement renforcé par fils (38) relie entre eux un bras de bride (66) de la deuxième bride (14), un bras (58) de la pièce intermédiaire (20) et un élément de soutien (40).

11. Dispositif d'accouplement (10) selon la revendication 9 ou 10,
dans lequel les éléments d'accouplement (38) comprennent chacun ledit au moins un paquet de fils (80, 80a, 80b, 80c), au moins deux douilles (82), ledit au moins un paquet de fils (80, 80a, 80b, 80c) entourant lesdites au moins deux douilles (82), et au moins un élément de renvoi (84), ledit au moins un paquet de fils (80, 80a, 80b, 80c) s'appliquant contre ledit au moins un élément de renvoi (84).

12. Dispositif d'accouplement (10) selon la revendication 11,
dans lequel ledit au moins un élément de renvoi (84) est disposé entre lesdites au moins deux douilles (82), et/ou
dans lequel ledit au moins un élément de renvoi (84) est positionné de telle sorte que ledit au moins un paquet de fils (80, 80a, 80b, 80c) s'étend dans la zone entre les douilles (82) avec au moins un coude ou une courbure.

13. Dispositif d'accouplement (10) selon l'une des revendications 11 ou 12,
dans lequel l'élément d'accouplement renforcé par fils (38) comprend plusieurs paquets de fils (80, 80a, 80b, 80c), au moins un élément de renvoi (84) étant associé à chaque paquet de fils (80, 80a, 80b, 80c), les éléments de renvoi (84) étant de préférence reliés entre eux, et/ou
dans lequel ledit au moins un paquet de fils (80, 80a, 80b, 80c) forme deux brins (88a, 88b) dans la zone entre lesdites au moins deux douilles (82), au moins un brin (88a, 88b) dudit au moins un paquet de fils (80, 80a, 80b, 80c) s'appliquant contre ledit au moins un élément de renvoi (84).

14. Dispositif d'accouplement (10) selon la revendication 13,
dans lequel au moins deux éléments de renvoi (84) sont associés audit au moins un paquet de fils (80, 80a, 80b, 80c), un brin respectif (88a, 88b) dudit au moins un paquet de fils (80, 80a, 80b, 80c) s'appliquant contre l'un des éléments de renvoi (84).

15. Bogie (1000) pour véhicule ferroviaire, comportant :
au moins un essieu (1002, 1004) qui comprend un arbre d'essieu (1010),
au moins un moteur (1012) et
au moins un dispositif d'accouplement (10) selon l'une des revendications 1 à 14, le dispositif d'accouplement (10) accouplant le moteur (1012) à l'arbre d'essieu (1010).

16. Bogie (1000) selon la revendication 15,
dans lequel le moteur (1012) et/ou ledit au moins un dispositif d'accouplement (10) sont disposés coaxialement à l'arbre d'essieu (1010), et/ou
dans lequel la première bride (12) du dispositif d'accouplement (10) est reliée de manière solidaire en rotation à l'arbre d'essieu (1010), et/ou la deuxième bride (14) du dispositif d'accouplement (10) est reliée à un arbre de sortie de moteur du moteur (1012) par la partie de liaison (34).

17. Véhicule ferroviaire comprenant au moins un dispositif d'accouplement (10) selon l'une des revendications 1 à 14 ou au moins un bogie (1000) selon la revendication 15 ou 16.
